# EUROPÄISCHE PATENTSCHRIFT

(11) **EP 2 107 862 B1**
(45) Veröffentlichungstag und Bekanntmachung des Hinweises auf die Patenterteilung: **02.09.2015**
(21) Anmeldenummer: 08103363.1
(22) Anmeldetag: 03.04.2008
(51) Int. Cl.: H05H 1/30, H05H 1/42

(54) **Verfahren und Vorrichtung zur Behandlung von Dispersionsmaterialien**
Method and device for handling dispersion materials
Procédé et dispositif destinés au traitement de matériaux de dispersion

(43) Veröffentlichungstag der Anmeldung: 07.10.2009
(73) Patentinhaber: Maicom Quarz GmbH, 04626 Posterstein (DE)
(72) Erfinder: Guskov, Mikhail, Sankt Petersburg (RU); Marsch, Hermann, 04626 Posterstein (DE)
(74) Vertreter: Lippert, Stachow & Partner

(56) Entgegenhaltungen:
- WO-A-2007/109906
- WO-A2-2005/004556
- FR-A- 2 652 702
- GB-A- 1 469 317
- US-A- 4 616 779
- US-A- 5 047 612
- US-A- 6 153 852

## Beschreibung

Nachfolgend werden ein Verfahren und eine Vorrichtung zur Herstellung, Reinigung oder Umwandlung von Dispersionsmaterialien im Plasma vorgeschlagen. Das Verfahren und die Vorrichtung ermöglichen einen verbesserten Prozess der Umwandlung von Dispersionsmaterialien unter Plasmabedingungen. Unter Dispersionsmaterialien werden dabei Stoffe verstanden, die fein pulverisiert sind, wobei die einzelnen Partikel des Dispersionsmaterials unterschiedlichste Formen und Größen haben können. Beispielsweise können die Partikel kugelförmig oder langgestreckt, nadelförmig usw. sein. In vielen Fällen handelt es sich dabei um mineralische Stoffe wie beispielesweise Silizium, das auf diese Weise in einen hochreinen Zustand gebracht wird oder innerhalb der Vorrichtung durch die Einwirkung des Plasmas durch Umwandlung aus Quarz gewonnen wird. Mit dem vorgeschlagenen Verfahren und der Vorrichtung können derartige Stoffe beispielsweise in einer chemischen Reaktion hergestellt, von unerwünschten Beimischungen gereinigt oder durch Verbindung mit anderen Stoffen umgewandelt werden.

US 5,047,612 beschreibt eine Plasmaspritzeinrichtung zur Beschichtung eines Substrats mit einem horizontal ausgerichteten Plasmastrahl.

Bei bekannten Verfahren und Vorrichtungen zur Herstellung, Reinigung oder Umwandlung von Dispersionsmaterialien im Plasma wird ein plasmabildendes Gas von oben her in eine Reaktionskammer eingebracht und ionisiert. Gleichzeitig wird ein Dispersionsmaterial in derselben Richtung, das heißt von oben nach unten, in die Reaktionskammer eingebracht, so dass das Dispersionsmaterial durch die Einwirkung des Plasmas gereinigt oder umgewandelt wird. Bei all diesen bekannten Verfahren und Vorrichtungen erfolgt demnach die Behandlung des Dispersionsmaterials nach dem Gleichstromprinzip. Verfahren und Vorrichtungen, die nach diesem Prinzip arbeiten, sind beispielsweise in US 4,379,777, US 4,642,207, US 4,853,250, US 6,379,419, US 2003/0143153 A1, US 2005/0217421 A1, US 2007/0029291 A1 und US 2007/0130656 A1 beschrieben. Im Allgemeinen ist es bei den bekannten Verfahren und Vorrichtungen unumgänglich, für die Einleitung des Dispersionsmaterials aufgrund der hohen Temperaturen im Bereich des Plasmas einen gekühlten Einlass zu verwenden.

Durch das nachfolgend beschriebene Verfahren sowie die vorgeschlagene Vorrichtung zur Durchführung des Verfahrens können bei geeigneter Ausgestaltung die Masseverluste an verarbeitetem Material infolge Materialverdampfung verringert werden und die energietechnischen Kennwerte des Reaktors durch selektive Plasmabearbeitung des Materials je nach Größe der in den Reaktor gelangenden Teilchen verbessert werden. Außerdem bieten Ausgestaltungen des beschriebenen Verfahrens und der Vorrichtung eine wirksame und hinsichtlich des Investitionsaufwandes preiswerte Gestaltung zur Entnahme des bearbeiteten Materials sowie eine Steigerung der kontinuierlichen Sollbetriebszeit des Plasmareaktors.

Aus GB 1 469 317 A sind Verfahren und Vorrichtungen zur Behandlung eines Dispersionsmaterials in einem Plasma bekannt, bei denen ein plasmabildendes Gas in eine Reaktionskammer eingeleitet und ionisiert wird und ein Dispersionsmaterial in die Reaktionskammer und in den Bereich des Plasmas eingeleitet, unter Einwirkung des Plasmas behandelt und anschließend aus dem Bereich des Plasmas entnommen wird, wobei die Einleitung des plasmabildenden Gases und die Einleitung des Dispersionsmaterials unabhängig voneinander und aus unterschiedlichen Richtungen erfolgen. Dabei wird das Dispersionsmaterial an der Oberseite der Reaktionskammer in großem Abstand zum Ort der Plasmaerzeugung eingelassen. Das Dispersionsmaterial fällt durch Schwerkraftwirkung auf das Plasma zu, wobei sich die Teilchen des Dispersionsmaterials unkontrolliert in der Reaktionskammer verteilen, was sich ungünstig auf die Effizienz des Verfahrens auswirkt.

Daher besteht eine Aufgabe der Erfindung darin, Verfahren und Vorrichtungen anzugeben, die ausgehend vom Stand der Technik eine effizientere Behandlung von Dispersionsmaterialien ermöglichen.

Diese Aufgabe wird durch ein Verfahren mit den Merkmalen des Anspruchs 1 und eine Vorrichtung mit den Merkmalen des Anspruchs 9 gelöst. Vorteilhafte Ausgestaltungen sind in den abhängigen Ansprüchen angegeben.

Bei einem Verfahren zur Herstellung, Reinigung oder Umwandlung von Dispersionsmaterialien im Plasma eines Dispersionsmaterials in einem Plasma, bei dem ein plasmabildendes Gas von unten her und vertikal aufsteigend in eine Reaktionskammer eingeleitet und ionisiert wird, ein Arbeitsgas von oben her vertikal fallend in die Reaktionskammer eingeleitet wird und ein Dispersionsmaterial in die Reaktionskammer und in den Bereich des Plasmas eingeleitet, unter Einwirkung des Plasmas behandelt und anschließend aus dem Bereich des Plasmas entnommen wird, wobei die Einleitung des plasmabildenden Gases und die Einleitung des Dispersionsmaterials unabhängig voneinander und aus unterschiedlichen Richtungen erfolgen, wird vorgeschlagen, dass das Dispersionsmaterial innerhalb der Reaktionskammer bis zum Ort der Plasmabildung geführt und erst unmittelbar vor dem Ort der Plasmabildung in Richtung auf das Plasma freigesetzt wird.

Durch die räumliche Trennung der Einleitung des plasmabildenden Gases und des Dispersionsmaterials wird das Dispersionsmaterial innerhalb der Reaktionskammer von außen in das Plasma eingeleitet. Gegenüber den bekannten Lösungen sind daher die der Einleitung des Dispersionsmaterials in die Reaktionskammer dienenden Einrichtungen deutlich geringeren Temperaturen ausgesetzt, da der zur Einleitung des Dispersionsmaterials dienende Einlass nicht der direkten Einwirkung des Plasmas ausgesetzt ist. Darüber hinaus wird die Wirkung des Plasmas auf die Partikel des Dispersionsmaterials dadurch verstärkt, dass das plasmabildende Gas und das Dispersionsmaterial in unterschiedlichen Richtungen innerhalb der Reaktionskammer strömen.

In einer Ausgestaltung des Verfahrens kann vorgesehen sein, dass die Einleitung des Dispersionsmaterials entgegengesetzt zur Richtung der Einleitung des plasmabildenden Gases erfolgt. Insbesondere bei langgestreckten Reaktionskammern, bei denen das plasmabildende Gas und das Dispersionsmaterial an den entgegengesetzten Enden der Reaktionskammer eingeleitet werden, ergibt sich durch diese Ausgestaltung, dass die Geschwindigkeitsdifferenz zwischen dem plasmabildenden Gas und dem Dispersionsmaterial Maximalwerte erreicht, wodurch die Wirksamkeit des Plasmas bei der Behandlung des Dispersionsmaterials ebenfalls maximiert wird.

In einer anderen Ausgestaltung des Verfahrens kann vorgesehen sein, dass die Einleitung des Dispersionsmaterials quer zur Richtung der Einleitung des plasmabildenden Gases erfolgt. Der Begriff "quer zur Richtung der Einleitung des plasmabildenden Gases" soll in diesem Zusammenhang sowohl umfassen, dass das Dispersionsmaterial exakt rechtwinklig zur Richtung des plasmabildenden Gases in die Reaktionskammer eingeleitet wird, als auch dass das Dispersionsmaterial in einer Richtung eingeleitet wird, die mit der Richtung des plasmabildenden Gases einen von 90° verschiedenen Winkel bildet, beispielsweise indem das Dispersionsmaterial dem plasmabildenden Gas schräg entgegen eingeleitet wird.

Gleichzeitig kann die Einleitung des Dispersionsmaterials tangential zum Plasma erfolgen. Der Begriff "tangential zum Plasma" soll dabei bedeuten, dass das Dispersionsmaterial nicht exakt in die Mitte des Plasmas, sondern in Randbereiche des Plasmas eingeleitet wird. Diese Ausgestaltung des Verfahrens kann beispielsweise dazu genutzt werden, die Ausbildung eines Zyklons innerhalb der Reaktionskammer zu unterstützen, wie nachfolgend noch näher erläutert wird.

Das plasmabildende Gas wird vom unteren Ende der Reaktionskammer her vertikal aufsteigend eingeleitet, d.h. das Plasma wird am unteren Ende der Reaktionskammer erzeugt. Dies schafft die Voraussetzung dafür, dass das Dispersionsmaterial von oben her gegen die Einleitungsrichtung des plasmäbildenden Gases eingeleitet wird, so dass das Dispersionsmaterial unterstützt durch die Schwerkraft in den Wirkungsbereich des Plasmas gelangt.

Innerhalb der Reaktionskammer kann vorgesehen sein, dass die Partikel des Dispersionsmaterials in einem Arbeitsgas schwebend in einem Zyklon bewegt werden, um die Wirkung des Plasmas auf die Partikel zu verstärken und die Verweilzeit der Partikel im Plasma zu erhöhen. Dabei kann der Zyklon so erzeugt werden, dass seine Achse mit der Richtung der Einleitung des plasmabildenden Gases zusammenfällt.

Weiter kann bei dem Verfahren vorgesehen sein, dass das Plasma und der Zyklon relativ zueinander so ausgerichtet sind, dass das Dispersionsmaterial nach der Behandlung im Plasma durch das Arbeitsgas des Zyklons gekühlt wird. Die fertig behandelten Partikel des Dispersionsmaterials können anschließend dem Zyklon und gegebenenfalls auch der Reaktionskammer entnommen werden.

Zur Durchführung des Verfahrens wird die nachfolgend beschriebene Vorrichtung vorgeschlagen. Ausgehend von bekannten Plasmareaktoren wird bei einer Vorrichtung zur Herstellung, Reinigung oder Umwandlung eines Dispersionsmaterials in einem Plasma, die eine Reaktionskammer mit einem an deren unterem Ende angeordneten Plasmagenerator umfasst, der einen ersten Einlass für ein vertikal aufsteigendes plasmabildendes Gas aufweist, und die mit einem zweiten Einlass für das Dispersionsmaterial versehen ist, wobei der zweite Einlass relativ zum ersten Einlass räumlich getrennt so angeordnet ist, dass das Dispersionsmaterial von außen in das Plasma geleitet wird, und einem am oberen Ende der Reaktionskammer angeordneten dritten Einlass für ein vertikal fallendes Arbeitsgas, vorgeschlagen, dass sich der zweite Einlass von der Wand der Reaktionskammer bis zum Ort der Plasmabildung erstreckt und erst unmittelbar vor dem Ort der Plasmabildung mündet.

Der zweite Einlass kann dabei beispielsweise dem ersten Einlass gegenüberliegend oder seitlich zum ersten Einlass angeordnet sein, wobei "seitlich angeordnet" bedeuten soll, dass eine Auslassöffnung des zweiten Einlasses auf das sich ausbildende Plasma gerichtet ist. Eine derartige Anordnung des zweiten Einlasses kann beispielsweise so ausgestaltet sein, dass das Dispersionsmaterial tangential zum Plasma eingeleitet wird, wobei "tangential zum Plasma" bedeuten soll, dass das Dispersionsmaterial nicht exakt in die Mitte des Plasmas, sondern in Randbereiche des Plasmas eingeleitet wird.

Der erste Einlass ist am unteren Ende der Reaktionskammer angeordnet. Wenn das plasmabildende Gas durch diesen ersten Einlass vertikal aufsteigend in die Reaktionskammer eingeleitet wird, kann das Dispersionsmaterial beispielsweise vom oberen Ende der Reaktionskammer her in vertikaler Richtung nach unten eingeleitet werden, aber auch (alternativ oder zusätzlich) aus einer seitlichen Richtung quer zur Richtung des plasmabildenden Gases, d.h. horizontal oder unter einem von 90° verschiedenen Winkel zur Richtung des plasmabildenden Gases, in die Reaktionskammer eingeleitet werden.

Weiterhin können in der Reaktionskammer Mittel zur Erzeugung eines Zyklons angeordnet sein. Derartige Mittel zur Erzeugung eines Zyklons können beispielsweise einen dritten Einlass für ein Arbeitsgas, ein Saugrohr und ein in dem Saugrohr angeordnetes Gebläse umfassen. Der dritte Einlass kann in einer Ausgestaltung der Vorrichtung dem ersten Einlass gegenüberliegend angeordnet sein. Das Saugrohr kann dann beispielsweise quer zum ersten Einlass angeordnet sein und außermittig in die Reaktionskammer münden. Der erste Einlass ist am unteren Ende der Reaktionskammer mit vertikal aufsteigender Einlassrichtung für das plasmabildende Gas angeordnet, und am oberen Ende der Reaktionskammer ist ein dem ersten Einlass gegenüberliegender dritter Einlass mit vertikal fallender Einlassrichtung für das Arbeitsgas angeordnet. In der Nähe des dritten Einlasses, aber senkrecht dazu kann das Saugrohr münden, das ein Gebläse zur Erzeugung eines Gasstroms innerhalb der Reaktionskammer aufweist und dessen Mündungsöffnung relativ zur vertikal ausgerichteten Längsachse der Reaktionskammer außermittig ausgerichtet ist, so dass der durch sie erzeugte Gasstrom innerhalb der Reaktionskammer einen Zyklon erzeugt.

Weiterhin kann ein Sammelbehälter zur Aufnahme des behandelten Dispersionsmaterials vorgesehen sein. Dieser Sammelbehälter kann außerhalb der eigentlichen Reaktionskammer angeordnet und durch einen Entnahmestutzen mit der Reaktionskammer verbunden sein. Beispielsweise kann der Entnahmestutzen am unteren Ende der Reaktionskammer angeordnet sein, so dass behandelte Partikel des Dispersionsmaterials aufgrund ihres Gewichts in diesen Entnahmestutzen fallen und auf diese Weise in den Sammelbehälter gelangen.

Nachfolgend werden die Vorrichtung und das Verfahren anhand eines Ausführungsbeispiels und zugehöriger Zeichnungen näher erläutert. Dabei zeigen
Fig. 1 eine skizzenartige Darstellung einer Vorrichtung gemäß Ausführungsbeispiel;
Fig. 2 ein Flussbild zur Veranschaulichung der axialen und tangentialen Anteile des Gasstroms;
Fig. 3 die Verlaufsbahn der Teilchen unterschiedlicher Größe bei axialer Einleitung von Material in das Plasma;
Fig. 4 die Verlaufsbahn der Teilchen unterschiedlicher Größe bei seitlicher Zuführung von Material in das Plasma.

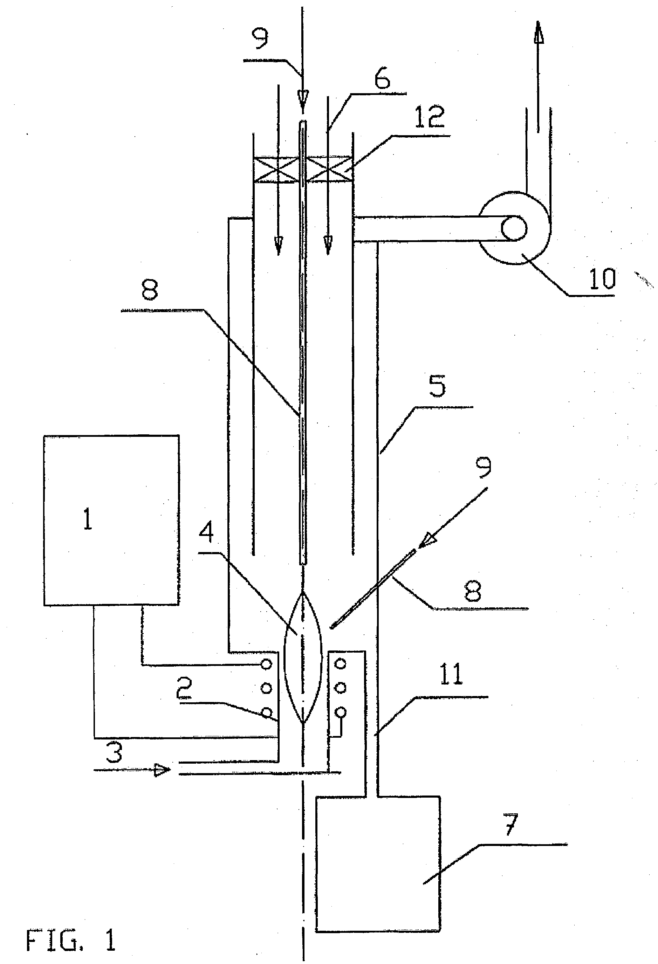

Der Plasmareaktor in Fig. 1 umfasst eine Reaktionskammer 5, an deren unterem Ende ein Plasmagenerator 2 angeordnet ist, dem Energie von einem RF-Generator 1 zugeführt wird. Die Reaktionskammer 5 weist eine langgestreckte Form auf, deren Längsachse vertikal ausgerichtet ist. Ebenfalls am unteren Ende der Reaktionskammer 5 und mit zentraler Ausrichtung relativ zum Plasmagenerator 2 ist ein erster Einlass 3 für ein plasmabildendes Gas angeordnet. Dadurch wird das plasmabildende Gas von unten her und vertikal aufsteigend in die Reaktionskammer 5 eingeleitet und anschließend durch die Wirkung des Plasmagenerators 2 ionisiert, so dass sich im unteren Bereich der Reaktionskammer 5 ein Plasma 4 ausbildet.

Am oberen Ende der Reaktionskammer 5 ist ein dritter Einlass 6 für ein Arbeitsgas angeordnet, der einen Filter 12 aufweist. Der dritte Einlass 6 ist dabei so ausgerichtet, dass das Arbeitsgas vertikal fallend in die Reaktionskammer 5 eingeleitet wird. Mit zentraler Ausrichtung relativ zum dritten Einlass 6 ist ein zweiter Einlass 8 für ein Dispersionsmaterial 9 angeordnet, so dass das Dispersionsmaterial 9, umströmt vom Arbeitsgas, vertikal fallend in die Reaktionskammer 5 eingeleitet wird. Ein zusätzlicher zweiter Einlass 8 für ein Dispersionsmaterial 9 ist in einer Seitenwand der Reaktionskammer 5 so angeordnet, dass alternativ oder zusätzlich Dispersionsmaterial 9 unter einem von 90° verschiedenen Winkel außermittig in das Plasma 4 eingeleitet werden kann.

Innerhalb der Reaktionskammer 5 werden die Partikel des Dispersionsmaterials 9 im Arbeitsgas schwebend in einem Zyklon bewegt, um die Wirkung des Plasmas 4 auf die Partikel zu verstärken und die Verweilzeit der Partikel im Plasma 4 zu erhöhen. Dabei wird der Zyklon so erzeugt, dass seine Achse mit der Richtung der Einleitung des plasmabildenden Gases zusammenfällt, d.h. die Achse des Zyklons und die Einleitung des plasmabildenden Gases erfolgen vertikal, aber mit entgegengesetztem Richtungssinn.

Der Zyklon innerhalb der Reaktionskammer wird durch geeignete Mittel erzeugt. Im Ausführungsbeispiel umfassen diese Mittel ein Gebläse 10, das über ein Saugrohr außermittig an den oberen Bereich der Reaktionskammer 5 angeschlossen ist und für den Gegenstrombetrieb des Zyklons sorgt.

Außerhalb der Reaktionskammer 5 ist ein Sammelbehälter 7 für das plasmabearbeitete Dispersionsmaterial vorgesehen, der über einen Entnahmestutzen 11 mit dem unteren Teil der Reaktionskammer 5 verbunden ist.

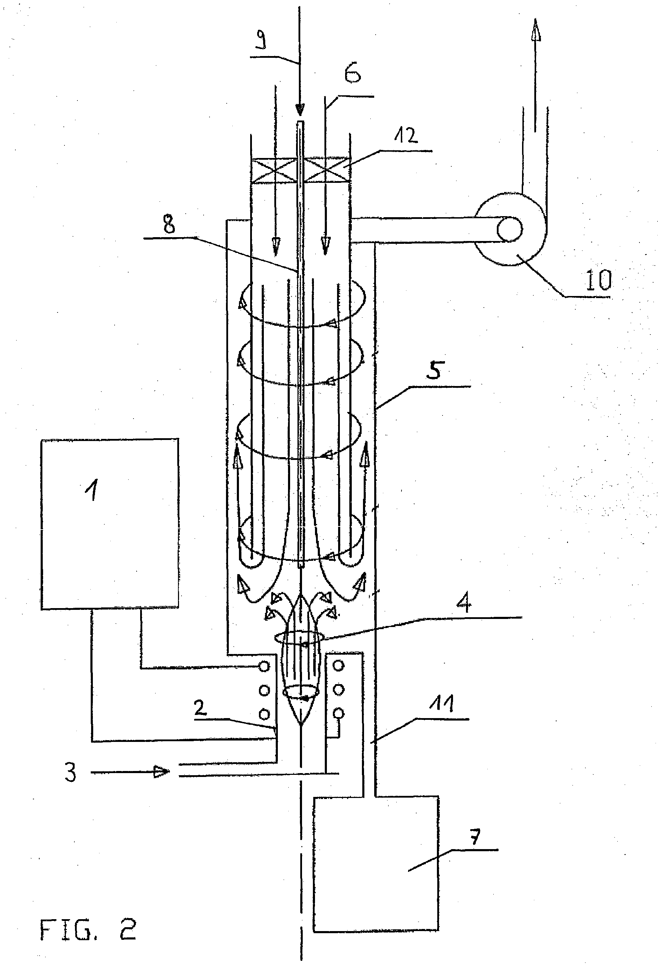

Fig. 2 veranschaulicht die axialen und tangentialen Anteile des Gasstroms innerhalb der Reaktorkammer 5. Nach dem Einschalten des Plasmagenerators 2, in den über den ersten Einlass 3 verwirbeltes plasmabildendes Gas eingeführt wird, sowie nach dem Warmlaufen des Zyklons innerhalb der Reaktionskammer 5, wird das Gebläse 10 zugeschaltet, durch dessen Funktion über den oberen Teil des im oberen Bereich der Reaktionskammer 5 angeordneten dritten Einlasses 6 das Arbeitsgas für den Zyklon eingezogen wird, durchläuft das Arbeitsgas die Filter 12. Als Arbeitsgas für den Zyklon kann sowohl die Umgebungsluft als auch ein beliebiges anderes Gas dienen, je nachdem, was zur Durchführung der einen oder anderen Aufgabe der Plasmabearbeitung von Material erforderlich ist. Der Reaktor ist so aufgebaut, dass die Richtung der Tangentialkomponente des Gasstromes des Zyklons richtungsmäßig mit der Tangentialkomponente des Plasmastroms übereinstimmt. Danach wird über den oberen zweiten Einlass 8, der sich auf der Achse des Zyklons am Gipfelpunkt befindet, oder/und über den an der Seitenfläche der Reaktionskammer 5 angeordneten zweiten Einlass 8 Dispersionsmaterial dem Plasmastrom entgegen zugeführt, der aus dem Plasmagenerator 2 hervortritt.

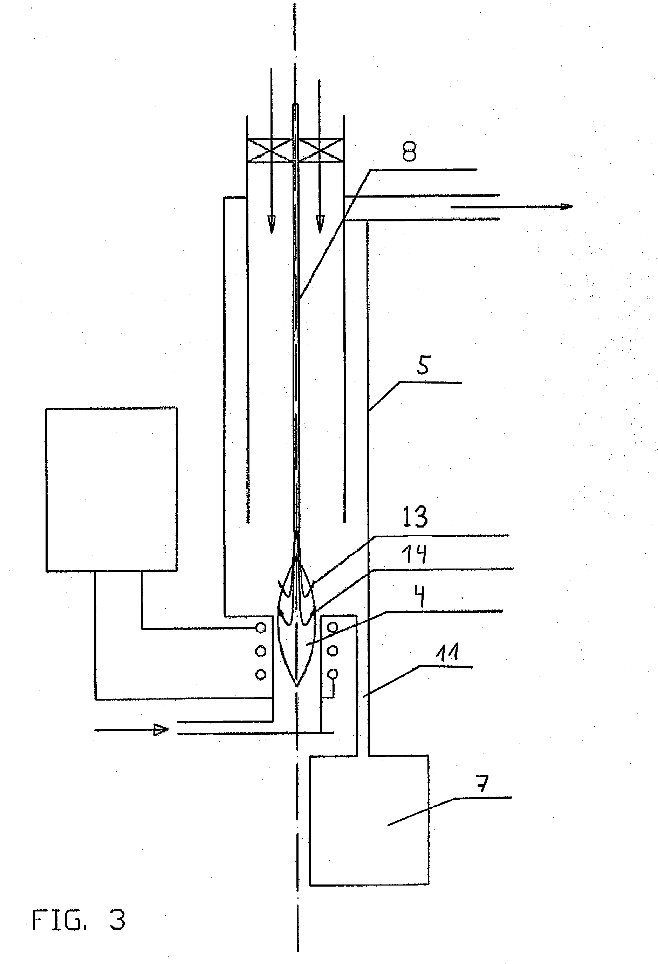

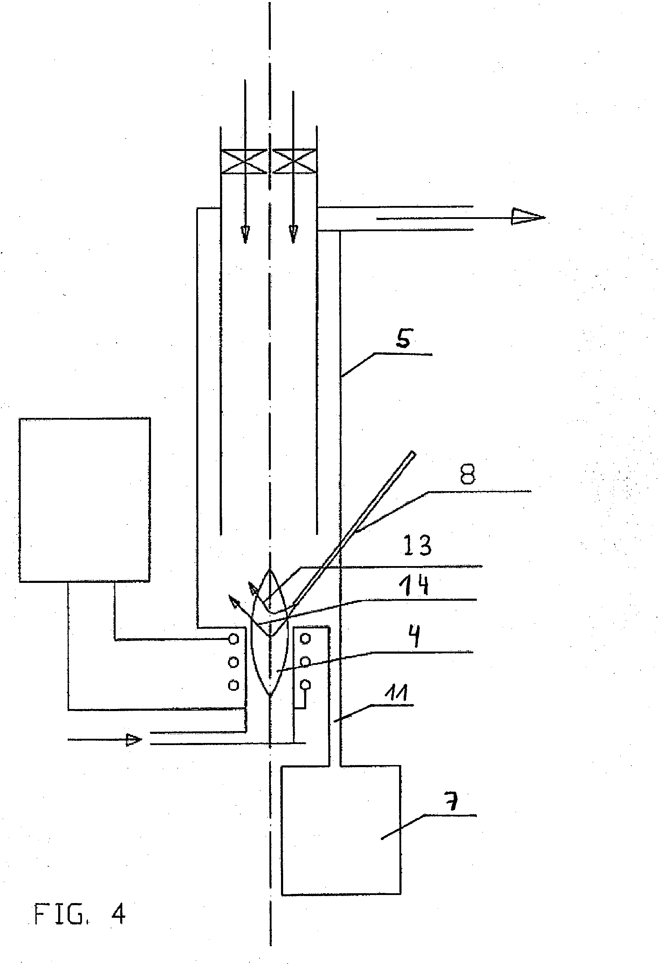

Mit Bezug zu den Fig. 3 und 4 werden die die Verlaufsbahnen von Teilchen unterschiedlicher Größe bei axialer bzw. seitlicher Einleitung von Dispersionsmaterial in das Plasma veranschaulicht. Das Dispersionsmaterial, das eine bestimmte Größenverteilung der darin enthaltenen Partikel aufweist, wird durch den entgegengesetzt gerichteten Plasmastrom infolge der unterschiedlichen Widerstandsfaktoren der einzelnen Teilchengrößen und -formen größenmäßig aufgetrennt. Größere Teilchen 14 dringen über eine größere Distanz in den Plasmastrom ein und haben eine längere Verlaufsbahn innerhalb der Hochtemperaturzone des Reaktors und damit auch eine längere Plasmabearbeitungszeit als kleinere Teilchen 13.

Die Teilchen, die in der Hochtemperaturzone des Reaktors bearbeitet wurden, werden infolge der Zentrifugalkraft an die Wand der Reaktionskammer 5 geschleudert. Dort vollführen sie nach Abkühlung durch das Arbeitsgas des Zyklons eine Kreisbewegung entlang der Wand der Reaktionskammer 5 und gelangen über den Entnahmestutzen 11, der im unteren Teil der Reaktionskammer 5 angeordnet ist, in den Sammelbehälter 7.

Die Steuerung des Prozesses zur Plasmabearbeitung von Material geschieht durch Änderung der Koordinaten, mit denen das Material in die Hochtemperaturzone eingeführt wird, durch Variierung der Leistung des Plasmagenerators sowie durch Änderung der Funktionsparameter des Gebläses 10.

Aus dem Dargelegten folgt, dass die Vorrichtung die Möglichkeit der selektiven Plasmabearbeitung von Dispersionsmaterial bietet, was die Massenverluste an Material durch Verringerung der Verdampfungsverluste senkt und die Qualität der Plasmabearbeitung verbessert. Aus dem gleichen Grunde sinkt auch der Energieaufwand pro Einheit zu bearbeiteten Materials und erhöht sich die kontinuierliche Sollbetriebsdauer des Reaktors infolge reduzierter Kondensatablagerung an der Oberflache der Funktionsteile des Reaktors.

Im Ausführungsbeispiel wurde der Plasmagenerator 2 mit dem Zyklon in einer gemeinsamen Reaktionskammer 5 angeordnet. Die Achse des Plasmagenerators 2, dessen Plasmastrahl 4 vertikal nach oben gerichtet ist, stimmt mit der Achse des Zyklons überein, so dass ihre Gasströme im Vergleich zur üblichen Funktionsweise derartiger Vorrichtungen entgegengesetzt zueinander verlaufen. Das Dispersionsmaterial 9 wird dem Plasmastrom 4 entgegen über einen oder mehrere zweite Einlässe 8 zugeführt, die auf der Achse des Plasmagenerators 2 im oberen Teil der Reaktionskammer 5 angeordnet sind oder/und sich an der Seitenfläche der Reaktionskammer 5 befinden und dem Plasmastrom 4 des Plasmagenerators 2 schräg entgegen gerichtet sind. Der praktische Betrieb des vorgeschlagenen Plasmareaktors bei der Durchführung des beschriebenen Verfahrens hat in eigenen Versuchen gezeigt, dass die vorgeschlagene Konstruktion eine unbegrenzte kontinuierliche Betriebsdauer des Reaktors ermöglicht und zu hoher Produktivität des Plasmareaktors bei hohem Wirkungsgrad der Plasmabearbeitung des Materials sowie zu einem hohen Wirkungsgrad in der Entnahme des fertig bearbeiteten Materials (98-99 %) bei mittleren Teilchengrößen des Dispersionsmaterials von 120 - 200 µm führt.

## Patentansprüche

1. Verfahren zur Herstellung, Reinigung oder Umwandlung eines Dispersionsmaterials (9) in einem Plasma (4), bei dem ein plasmabildendes Gas von unten her und vertikal aufsteigend in eine Reaktionskammer (5) eingeleitet und ionisiert wird, ein Arbeitsgas von oben her vertikal fallend in die Reaktionskammer (5) eingeleitet wird und ein Dispersionsmaterial (9) in die Reaktionskammer (5) und in den Bereich des Plasmas (4) eingeleitet, unter Einwirkung des Plasmas (4) behandelt und anschließend aus dem Bereich des Plasmas (4) entnommen wird, wobei die Einleitung des plasmabildenden Gases und die Einleitung des Dispersionsmaterials (9) unabhängig voneinander und aus unterschiedlichen Richtungen erfolgen, **dadurch gekennzeichnet, dass** das Dispersionsmaterial (9) innerhalb der Reaktionskammer (5) bis zum Ort der Plasmabildung geführt und erst unmittelbar vor dem Ort der Plasmabildung in Richtung auf das Plasma (4) freigesetzt wird.

2. Verfahren nach Anspruch 1, wobei die Einleitung des Dispersionsmäterials (9) entgegengesetzt zur Richtung der Einleitung des plasmabildenden Gases erfolgt.

3. Verfahren nach Anspruch 1, wobei die Einleitung des Dispersionsmaterials (9) quer zur Richtung der Einleitung des plasmabildenden Gases erfolgt.

4. Verfahren nach Anspruch 3, wobei die Einleitung des Dispersionsmaterials (9) tangential zum Plasma (4) erfolgt.

5. Verfahren nach einem der Ansprüche 1 bis 4, wobei das Dispersionsmaterial (9) in einem Arbeitsgas schwebend in einem Zyklon bewegt wird.

6. Verfahren nach Anspruch 5, wobei der Zyklon so erzeugt wird, dass seine Achse mit der Richtung der Einleitung des plasmabildenden Gases zusammenfällt.

7. Verfahren nach Anspruch 5 oder 6, wobei das Dispersionsmaterial (9) nach der Behandlung im Plasma durch das Arbeitsgas des Zyklons gekühlt wird.

8. Vorrichtung zur Herstellung, Reinigung oder Umwandlung eines Dispersionsmaterials (9) in einem Plasma (4), umfassend eine Reaktionskammer (5) mit einem an deren unterem Ende angeordneten Plasmagenerator (2), der einen ersten Einlass (3) für ein vertikal aufsteigendes plasmabildendes Gas aufweist, und mit einem zweiten Einlass (8) für das Dispersionsmaterial (9), wobei der zweite Einlass (8) relativ zum ersten Einlass (3) räumlich getrennt so angeordnet ist, dass das Dispersionsmaterial (9) von außen in das Plasma (4) geleitet wird, und einem am oberen Ende der Reaktionskammer (5) angeordneten dritten Einlass (6) für ein vertikal fallendes Arbeitsgas, **dadurch gekennzeichnet, dass** sich der zweite Einlass (8) von der Wand der Reaktionskammer (5) bis zum Ort der Plasmabildung erstreckt und erst unmittelbar vor dem Ort der Plasmabildung mündet.

9. Vorrichtung nach Anspruch 8, wobei der zweite Einlass (8) dem ersten Einlass (3) gegenüberliegend angeordnet ist.

10. Vorrichtung nach Anspruch 8 oder 9, wobei der zweite Einlass (8) seitlich zum ersten Einlass (3) angeordnet ist.

11. Vorrichtung nach Anspruch 10, wobei der zweite Einlass (8) so angeordnet ist, dass das Dispersionsmaterial (9) tangential zum Plasma (4) eingeleitet wird.

12. Vorrichtung nach einem der Ansprüche 8 bis 11, wobei der erste Einlass (3) am unteren Ende der Reaktionskammer (5) angeordnet ist.

13. Vorrichtung nach einem der Ansprüche 8 bis 12, wobei weiterhin Mittel zur Erzeugung eines Zyklons in der Reaktionskammer (5) angeordnet sind.

14. Vorrichtung nach Anspruch 13, wobei das Mittel zur Erzeugung eines Zyklons einen dritten Einlass (6) für ein Arbeitsgas, ein Saugrohr und ein in dem Saugrohr angeordnetes Gebläse (10) umfasst, und wobei der dritte Einlass (6) dem ersten Einlass (3) gegenüberliegend angeordnet ist und das Saugrohr quer zum ersten Einlass (3) angeordnet ist und außermittig in die Reaktionskammer (5) mündet.

15. Vorrichtung nach einem der Ansprüche 8 bis 14, wobei weiterhin ein Sammelbehälter (7) zur Aufnahme des behandelten Dispersionsmaterials (9) vorgesehen ist.

## Claims

1. Method for the production, purification or conversion of a dispersion material (9) in a plasma (4), in which a plasma-forming gas is introduced into a reaction chamber (5) from below and in a vertically rising manner and is ionized, a working gas is introduced into the reaction chamber (5) from above in a vertically falling manner and a dispersion material (9) is introduced into the reaction chamber (5) and into the area of the plasma (4), is treated under the effect of the plasma (4) and is subsequently removed from the area of the plasma (4), the introduction of the plasma-forming gas and the introduction of the dispersion material (9) being performed independently of one another and from different directions, **characterized in that** the dispersion material (9) is guided within the reaction chamber (5) to the location of the plasma forming and is only released in the direction of the plasma (4) directly before the location of the plasma forming.

2. Method according to Claim 1, the introduction of the dispersion material (9) being performed oppositely to the direction of the introduction of the plasma-forming gas.

3. Method according to Claim 1, the introduction of the dispersion material (9) being performed transversely to the direction of the introduction of the plasma-forming gas.

4. Method according to Claim 3, the introduction of the dispersion material (9) being performed tangentially to the plasma (4).

5. Method according to one of Claims 1 to 4, the dispersion material (9) being moved in a cyclone while suspended in a working gas.

6. Method according to Claim 5, the cyclone being generated in such a way that its axis coincides with the direction of the introduction of the plasma-forming gas.

7. Method according to Claim 5 or 6, the dispersion material (9) being cooled by the working gas of the cyclone after the treatment in the plasma.

8. Device for the production, purification or conversion of a dispersion material (9) in a plasma (4), comprising a reaction chamber (5) with a plasma generator (2), which is arranged at the lower end of said chamber and has a first inlet (3) for a vertically rising plasma-forming gas, and with a second inlet (8) for the dispersion material (9), the second inlet (8) being arranged spatially separately in relation to the first inlet (3) in such a way that the dispersion material (9) is directed into the plasma (4) from the outside, and a third inlet (6) for a vertically falling working gas, arranged at the upper end of the reaction chamber (5), **characterized in that** the second inlet (8) extends from the wall of the reaction chamber (5) to the location of the plasma forming and only opens out directly before the location of the plasma forming.

9. Device according to Claim 8, the second inlet (8) being arranged opposite the first inlet (3).

10. Device according to Claim 8 or 9, the second inlet (8) being arranged laterally with respect to the first inlet (3).

11. Device according to Claim 10, the second inlet (8) being arranged in such a way that the dispersion material (9) is introduced tangentially to the plasma (4).

12. Device according to one of Claims 8 to 11, the first inlet (3) being arranged at the lower end of the reaction chamber (5).

13. Device according to one of Claims 8 to 12, means for generating a cyclone also being arranged in the reaction chamber (5).

14. Device according to Claim 13, the means for generating a cyclone comprising a third inlet (6) for a working gas, a suction pipe and a fan (10), arranged in the suction pipe, and the third inlet (6) being arranged opposite the first inlet (3) and the suction pipe being arranged transversely to the first inlet (3) and opening out off-centre into the reaction chamber (5).

15. Device according to one of Claims 8 to 14, a collecting container (7) for receiving the treated dispersion material (9) also being provided.

## Revendications

1. Procédé de fabrication, de nettoyage ou de transformation d'un matériau de dispersion (9) dans un plasma (4), dans lequel un gaz générateur de plasma est introduit par le bas et monte verticalement dans une chambre de réaction (5) et est ionisé, un gaz de travail est introduit par le haut et descend verticalement dans la chambre de réaction (5) et un matériau de dispersion (9) est introduit dans la chambre de réaction (5) et dans la région du plasma (4), est traité par l'action du plasma (4) et est ensuite enlevé de la région du plasma (4), l'introduction du gaz générateur de plasma et l'introduction du matériau de dispersion (9) s'effectuant indépendamment l'une de l'autre et à partir de directions différentes, **caractérisé en ce que** le matériau de dispersion (9) est guidé à l'intérieur de la chambre de réaction (5) jusqu'au site de génération de plasma et est seulement libéré dans la direction du plasma (4) immédiatement avant le site de génération de plasma.

2. Procédé selon la revendication 1, dans lequel l'introduction du matériau de dispersion (9) s'effectue en sens inverse de la direction d'introduction du gaz générateur de plasma.

3. Procédé selon la revendication 1, dans lequel l'introduction du matériau de dispersion (9) s'effectue transversalement à la direction d'introduction du gaz générateur de plasma.

4. Procédé selon la revendication 3, dans lequel l'introduction du matériau de dispersion (9) s'effectue tangentiellement au plasma (4).

5. Procédé selon l'une quelconque des revendications 1 à 4, dans lequel le matériau de dispersion (9) en suspension dans un gaz de travail est déplacé dans un cyclone.

6. Procédé selon la revendication 5, dans lequel le cyclone est généré de telle sorte que son axe coïncide avec la direction d'introduction du gaz générateur de plasma.

7. Procédé selon la revendication 5 ou 6, dans lequel le matériau de dispersion (9) est refroidi après le traitement dans le plasma par le gaz de travail du cyclone.

8. Dispositif de fabrication, de nettoyage ou de transformation d'un matériau de dispersion (9) dans un plasma (4), comprenant une chambre de réaction (5) avec un générateur de plasma (2) disposé à son extrémité inférieure, lequel présente une première entrée (3) pour un gaz générateur de plasma montant verticalement, et comprenant une deuxième entrée (8) pour le matériau de dispersion (9), la deuxième entrée (8) étant disposée de manière séparée spatialement de la première entrée (3) de telle sorte que le matériau de dispersion (9) soit guidé depuis l'extérieur dans le plasma (4), et une troisième entrée (6) disposée au niveau de l'extrémité supérieure de la chambre de réaction (5), pour un gaz de travail descendant verticalement, **caractérisé en ce que** la deuxième entrée (8) s'étend depuis la paroi de la chambre de réaction (5) jusqu'au site de génération de plasma et débouche seulement immédiatement avant le site de génération de plasma.

9. Dispositif selon la revendication 8, dans lequel la deuxième entrée (8) est disposée en regard de la première entrée (3).

10. Dispositif selon la revendication 8 ou 9, dans lequel la deuxième entrée (8) est disposée latéralement par rapport à la première entrée (3).

11. Dispositif selon la revendication 10, dans lequel la deuxième entrée (8) est disposée de telle sorte que le matériau de dispersion (9) soit introduit tangentiellement par rapport au plasma (4).

12. Dispositif selon l'une quelconque des revendications 8 à 11, dans lequel la première entrée (3) est disposée à l'extrémité inférieure de la chambre de réaction (5).

13. Dispositif selon l'une quelconque des revendications 8 à 12, dans lequel des moyens sont en outre disposés dans la chambre de réaction (5) en vue de générer un cyclone.

14. Dispositif selon la revendication 13, dans lequel le moyen de génération d'un cyclone comprend une troisième entrée (6) pour un gaz de travail, un tube d'aspiration et une soufflante (10) disposée dans le tube d'aspiration, et dans lequel la troisième entrée (6) est disposée en regard de la première entrée (3) et le tube d'aspiration est disposé transversalement à la première entrée (3) et débouche de manière excentrée dans la chambre de réaction (5).

15. Dispositif selon l'une quelconque des revendications 8 à 14, dans lequel un récipient collecteur (7) est en outre prévu pour recevoir le matériau de dispersion traité (9).
